# EUROPEAN PATENT SPECIFICATION

(11) **EP 0 482 277 B1**
(45) Date of publication and mention of the grant of the patent: **29.03.1995**
(21) Application number: 91101029.6
(22) Date of filing: 26.01.1991
(51) Int. Cl.: F16L 47/06, F16L 9/12, B29D 23/00

(54) **A method of manufacturing a pipe section, a pipe section and a joint between two pipe sections**
Methode zur Herstellung eines Rohrabschnittes, Rohrabschnitt und Verbindung zweier Rohrabschnitte
Méthode pour manufacturer une section de tuyau, section de tuyau et joint entre deux sections de tuyaux

(30) Priority: 25.10.1990 FI 905268
(43) Date of publication of application: 29.04.1992
(73) Proprietor: UPONOR N.V., Philipsburg Sint Maarten (AN)
(72) Inventor: Järvenkylä, Joni, SF-00300 Helsinki (FI)
(74) Representative: Baronetzky, Klaus, Dipl.-Ing.

(56) References cited:
- EP-A- 0 001 482
- DE-A- 2 742 934
- DE-A- 3 027 867
- DE-A- 3 603 481
- DE-A- 3 632 225
- DE-B- 1 255 292

## Description

This invention concerns a method of manufacturing a pipe section, at least a part of the outer surface of which is ribbed, by injecting plastic or another thermoplastic material and a pipe section manufactured in this manner as well as a joint between two pipe sections, at least one of which is manufactured in the manner according to the invention.

Flexible pipes and pipe couplings to be installed in the earth are supposed to have a sufficient stiffness against the load of the earth. In known structures this has been solved by providing the pipe couplings with material thicknesses corresponding at least to the wall of the pipe to be joined. This has led to rather massive structures, because it has not been fully known how a plastic coupling behaves in the earth. The patent SE 7116205-1 describes another solution, in which a thick-walled body portion is reinforced by massive stiffening ribs in such a way that the stiffness exceeds many times the stiffness of the flexible pipe couplings, and the aim has been to provide the sockets with thin walls and to make them flexible.

Especially when used as drain pipes, the ribbed pipe sections, as pipes or pipe couplings, in which the desired ring stiffness of the pipe section can be provided by adjusting the dimensioning of and the distance between the ring stiffness ribs, are typically realized in a considerably bigger material thickness than the wearing effect of the substance flowing in the pipe would require. There are several reasons for this. If such a thin-walled ribbed pipe section is manufactured in a conventional manner by injecting, a so-called connecting juncture is formed at the pipe section, which juncture can open under the combined influence of the strain caused by external load and the temperature load caused by the hot sewage flowing out of buildings.

A special complex of problems also appears if the socket possibly included in the pipe section is carried out as a thin-walled structure. As far as the wearing caused by the substance flowing in the pipe, and on the other hand, the external ring stiffness are concerned, this joint could be dimensioned thinner than the body portion. The reason for this is that in use the spigot of another pipe section is within the socket, which spigot is subjected to the wearing caused by the substance flowing in the pipe, and additionally, this spigot together with the socket also provides the joint with an at least sufficient ring stiffness. Such a socket dimensioned considerably thinner than conventionally and joining the ribbed body portion is known from the patent SE 7116205-1 mentioned above. In the pipe section according to this publication the socket is carried out in the same thickness all along, even if its opening end is reinforced by an annular rib, by means of which a gasket is fastened to the opening end of the socket. However, the use of a socket so flexible is not possible for tightness reasons, if the spigot is made of a flexible material. The use of such a socket is, however, not possible in structures in which the rubber ring gasket sealing the joint is situated on the outer surface of the spigot. This is due to that the rubber gasket compressed between the spigot and the socket then causes such a high pressure on the socket that the socket wall bends because of yielding plastic and a local bulge appears. On account of this, the tightness of such a socket thinner than usual is bad in the long run.

The dimensioning of the socket and especially the necessary pressing pressure of the gasket are substantially influenced also by the penetrating power of plant roots. This power is so big that a surface pressure of about 5 bars is required between the socket and the gasket in order that a penetration of roots can be prevented with certainty. If e.g. the pipe diameter of PVC pipes is 160 mm, this leads in practice to a wall thickness of 3,6 mm required for the socket, i.e. to the ratio of an average diameter to the wall thickness, i.e. to an SDR value of about 44, and corresponds to the dimensioning according to pipe class S-20 conventionally used at present. It would thus seem that the socket cannot be made thinner than it is now.

The object of the present invention is, however, to put forward a pipe section in which such a saving of material is achieved without the structure loosing its tightness even in long-time use. To achieve this, the method of the invention is characterized in that when injecting material into an injection mould the flow resistance of the material at the injection point is adjusted to be smaller in the direction of the periphery of the pipe section than in the axial direction of the pipe section. This is preferably provided either by injecting the material into the mould by using as injection point at least a mould point situated in the middle area of the pipe section and corresponding to a reinforcement of the wall or by cooling the mould and/or a core therein in the axial direction of the pipe section from annular areas situated at both sides of the injection point stronger than the injection point. By means of doing so, it is possible to prevent the core from bending, which will be a considerable problem when thin-walled pipe sections shall be injected in such a way that only one injection point in the middle of the mould is used.

By using the method of the invention, it is possible to manufacture a pipe section in which the socket or the spigot also is thinner than usual. Thus it is possible to provide a joint between two pipe sections, at least one of which has at least a part of the outer surface ribbed, one section comprising a socket and the other being provided with a spigot to be pushed into the socket and either the socket or the spigot comprising a gasket to seal the joint, which joint is characterized in that the ring stiffness of the socket/the spigot provided with the gasket is greater than the ring stiffness of its counterpart and that the joint is not more than three times ring stiffer than either of the pipe sections separately in the area outside the joint. In a conventional pipe intended to be used as a drain pipe, it is not possible to achieve a lower value than four for the ratio of the ring stiffness of the joint to that of the rest of the pipe section.

The ring stiffness of the joint is preferably 20 kN/m² at the most measured according to the standard ISO/DP 9969-1989. The joint can be preferably dimensioned in such a way that the socket and the spigot forming the joint endure the pressing pressure of 5 bars caused by the gasket only within the area of influence of the gasket.

A preferable embodiment of the pipe joint of the invention is further characterized in that the ring stiffness of the socket or the spigot is not more than two times greater than the ring stiffness of the rest of the pipe section, the ring stiffness of a socket/a spigot not provided with a gasket being about 0,3- to 1,0-fold, preferably about 0,3- to 0,6-fold, most preferably about 0,5-fold with respect to the ring stiffness of the rest of the pipe section. The above design possibilities are based on the observation that the ring stiffness of the pipe section does not need to be the same along its whole length, but it can vary if needed and preferably in the very manner mentioned above. If the ring stiffness of a joint between two pipe sections were substantially greater in use than that of the rest of the pipe section, a greater strain would tend to be directed to the joint than to the rest of the pipe section. This is not desirable, and due to that, the object is to provide a pipe section the ring stiffness of which as a part of a pipe line would be as even as possible along the whole length.

A pipe section manufactured by means of the method of the invention is characterized in that the SDR value of the pipe section, i.e. the ratio of the average diameter to the wall thickness is about 41 to 60, as far as PVC pipes are concerned. The pipe section preferably comprises a reinforcement of the wall in its middle area.

When using the method and the structure of the invention, the problems caused by the thin wall of the pipe section can be avoided, because the material at the injection can be made to flow quickly to the other side of the section, the core being prevented from bending at the same time. Though point feeding of mass is used in the method of the invention, it can be made to remind of the more preferable ring feeding when proceeding according to the method of the invention. By means of this method also a formation of a weak connecting juncture is substantially prevented and a winding connecting juncture can be provided, which is stronger than a conventional rectilinear connecting juncture.

In order that a conventional dimensioning of the socket in connection with a thin-walled pipe section of the invention would not be necessary either and the advantages of a ribbed structure could be benefited also in the structure thereof and it still could be provided with a desired ring stiffness, and in order that the properties of the socket could be made as even as possible in the axial direction, and on the other hand, the mouthpart of the socket could be made stiff enough to receive also possible external knocks or blows, it is possible to proceed with the pipe section of the invention in such a way that the socket comprises at least one annular ribbed flange on the outer surface of its cylindrical portion and a hollow annular rib for the gasket at its mouthpart and/or a ring stiffness rib at the edge of the mouthpart.

In practice, a ring stiffness of the socket lesser than that of the rest of the pipe section can preferably be achieved in such a way that the height of the annular ribbed flange of the cylindrical portion of the socket is less than the height of the ring stiffness ribs of the body portion.

When joining together pipe sections, the socket of the pipe section being intended to receive the spigot of another pipe section, the outer surface of which spigot is provided with a gasket, it is preferable that the ribbed flange of the socket is situated in the vicinity of the countersurface of said gasket. The annular ribbed flange being filled, the countersurface of the gasket at the socket is formed of the area of the inner surface of the socket preferably situated at the ribbed flange, and the annular ribbed flange being hollow, the countersurface of the gasket at the socket is formed of the area of the inner surface of the socket preferably between two ribbed flanges. In this manner, the socket can be provided with a better ring stiffness at the very point to which the pressing pressure caused by the gasket is directed. Thus this area cannot yield and cause a bulge at the socket and weaken the tightness of the joint in the long run.

Further to the same end, to optimize the function of the socket and to equalize its stiffness and to make the pipe section wear resistant enough in spite of thin wall thickness, it is preferable that it comprises an annular reinforcement at the collar portion of the socket. The annular reinforcement of the collar portion preferably comprises a strengthening of the wall of the pipe section within the area of the joint between the collar portion and the body portion. This strengthening of the collar portion of the socket can be further modified in order to optimize the general function of the whole socket by providing it with a structure more flexible than that of the rest of the pipe section. In this way, this collar portion can be adapted to a situation in which the longitudinal axes of two pipe sections joined together form a minor angle with respect to each other. This structure of the collar portion being more flexible than that of the rest of the pipe section can be provided by making this collar portion corrugated, most preferably double-corrugated. The best possibility of improving the flexibility of this collar portion is provided by an embodiment in which the material of the collar portion is more flexible than the material of the rest of the socket or the body portion. As such material can particularly be used a thermoplastic elastomer. Also in this case, the collar portion is preferably corrugated.

If the pipe section of the invention comprises a spigot to be introduced into a socket provided with a gasket in another pipe section, it is characterized in that the spigot only within the area of a sealing surface abutting the gasket comprises a smooth cylindrical area being at least as much as about the heat expansion of the pipe section broader than the sealing surface abutting the gasket.

In the following, the pipe section of the invention is described in greater detail referring to the enclosed drawing, in which
Figure 1 shows one exemplifying embodiment of a pipe section of the invention from above,
Figure 2 shows a partial cross-section of the pipe section of Figure 1 within the area of one of its sockets, this socket joining the spigot of another pipe section,
Figure 3 shows a partial cross-section of another embodiment of the pipe section of the invention within the area in which the pipe section is joined to the spigot of the other pipe section and
Figure 4 shows a partial cross-section of a third and fourth embodiment of the pipe section of the invention within the area in which they are joined together.

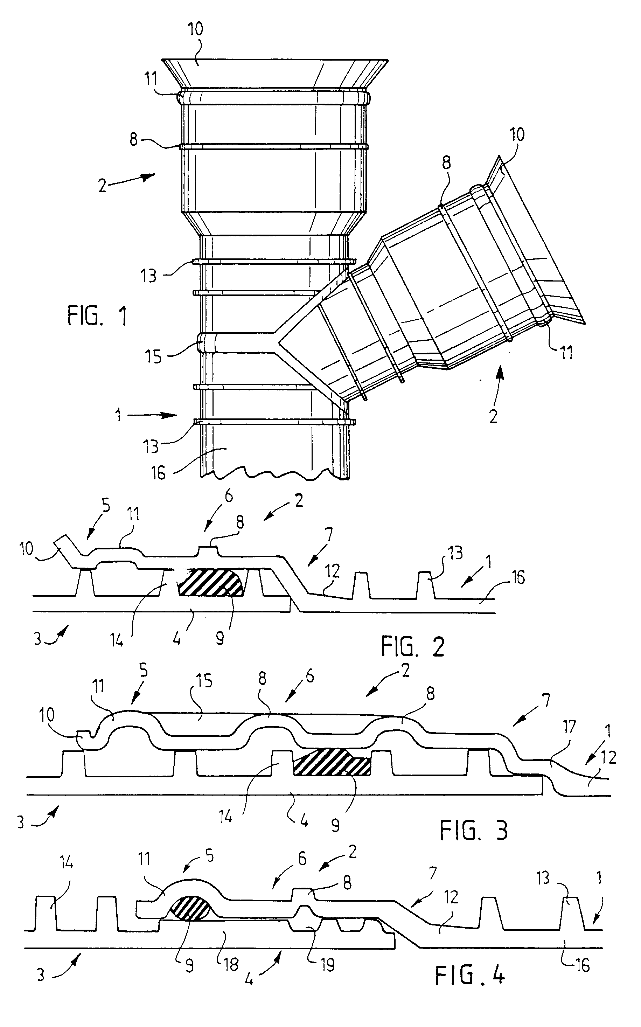

Figure 1 shows an exemplifying embodiment of a pipe section of the invention from above. It comprises a ribbed body portion 1 and two sockets 2 joined thereto in a substantially Y-shaped formation. In the middle area of the pipe section of the invention is positioned a rib 15 being broader and flatter than the other ring stiffness ribs 13 of the pipe section and functioning as a reinforcement of the wall, at which reinforcement the material is fed when injecting the pipe section. When using such a broad ring rib as feeding point, the material is made to move quickly also to the other side of the pipe section, whereby a formation of a weak connecting juncture and a bending of a core are avoided, which otherwise could occur under the influence of a pressure one-sidedly directed to the core when injecting a thin-walled pipe. By adjusting the breadth of the reinforcement or the feeding rib only one-sidedly, it is possible to effect a winding connecting juncture. The wall of this pipe section can easily be made even as thin as 1 to 2 % of the pipe diameter without the ring stiffness of the pipe section suffering from it, however. Along the socket 2 the pipe section further comprises an annular ribbed flange 8 and at the mouth of the socket reinforcements 10 and 11. As for this, the pipe section will be described in greater detail in connection with Figure 2.

Figure 2 shows a situation in which the socket 2 of the pipe section of Figure 1 is joined to a spigot 4 of another pipe section 3. The pipe section 1 of the invention then comprises a body portion 16 and at least one socket 2 joined thereto, the inner diameter of which is bigger than the inner diameter of the body portion 16. The body portion 1 is externally ribbed by means of ring ribs 13. Into the socket 2 is pushed the spigot 4 of the other pipe section 3, at the outer surface of which spigot, in a space between two annular ribs 14 on its outer surface, is placed a gasket 9. At this gasket, the socket 2 of the embodiment of Figure 1 is provided with an annular rib 8 projecting from the socket. This gives the socket such a ring stiffness at the gasket that the gasket 9 is not able to bulge the socket 2. In the embodiment of Figure 1, said annular rib 8 of the socket 2, comprising a generally cylindrical middle part 6, a mouthpart 5 at the mouth of the socket and a collar portion 7 joining the socket to the body portion 1, is situated on the generally cylindrical portion of the socket 2. In order to make the pipe section of the invention optimal as far as its ring stiffness properties are concerned, i.e. as similar as possible along its whole length in use, the rib 8 resistant to flow is provided with a smaller height than the ring stiffness ribs 13 of the body portion 1. In this manner, the ring stiffness of the socket will be not more than two times greater than the ring stiffness of the body portion, though their wall thicknesses are quite near each other.

The embodiment of the pipe section of the invention shown in Figure 1 further comprises two stiffening structures at its mouth part, i.e. an annular hollow ribbed flange 11 and quite at the mouthing of the pipe a rib 10 improving the impact resistance of this mouthing. This rib 10 is mainly formed of an edge portion of the mouthpart turned obliquely outwards from the middle axis of the pipe. These stiffening structures 10 and 11 are intended to provide the mouthpart of the socket with a sufficient stiffness against possible impacts from outside.

The embodiment of Figure 2 further comprises a reinforcement 12 at the collar portion 7. This reinforcement 12 of the collar portion 7 is formed to strengthen the outer surface of the collar portion in such a way that the inner diameter of the body portion 1 does not increase at this portion. By making the collar portion stronger in this manner, two advantages are achieved. Firstly, the ring stiffness of the collar portion increases, and secondly, the pipe wall is formed stronger at this very place, which is most worn by the substance flowing in the pipe.

Figure 3 shows a second embodiment of the pipe section of the invention, in which two hollow ribs 8 have been used at the generally cylindrical portion 6 of the socket 2 to provide a suitable ring stiffness. In this case, the gasket 9 arranged between the ring ribs 14 on the outer surface of the spigot 4 of the other pipe section 3 pushed into the socket 2 is supported on the area between these hollow ring ribs 8 in the socket 2. As to the area of the mouthpart 5 of the socket, the embodiment of Figure 3 corresponds quite far to the embodiment of Figure 2 comprising a hollow annular rib 11 and an edging 10 extending outwards from the middle axis of the socket. In the embodiment of Figure 3 the socket 2 has been stiffened also in the axial direction by means of axial ribs 15, which can be for instance four. As appears from Figure 3, these axial ribs 15 join the radial ribs 8 and 11 in such a way that the height thereof does not exceed the height of these radial ribs.

Also in the embodiment of Figure 3 the collar portion 7 of the socket is reinforced. In the embodiment of Figure 3 this has occurred by means of the reinforcement 12 of the wall and a stepped or corrugated portion 17, in which case, as in the embodiment of Figure 2, the reinforcement 12 is an external wall strengthening in the area of the joint between the collar portion 7 and the body portion 1. By means of an axial corrugation 17, it is possible to improve the ring stiffness of the collar portion and in addition to that to provide the collar portion with other properties important for the function of the pipe section of the invention. The fact is that this collar portion can be made more flexible than the rest of the pipe section. Thus this collar portion can be adapted to a situation in which the middle axes of the two pipe sections joined together form a minor angle with respect to each other. Normally, the socket tries to get elliptical in a torsion situation like this, which leads to a weakened tightness of the joint. In the structure of Figure 3, the corrugated portion 22 even as such and possibly when carried out thinner than the rest of the pipe section provides this section with a better flexibility than the rest of the pipe section. This property can, however, be considerably further improved, if the collar portion 7 is made of a material more flexible than the rest of the pipe section. Such a material can for instance be a thermoplastic elastomer. A structure like this can be carried out in such a way that at first are injected the body portion of the pipe section and a separate sleeve to be formed to a socket and then the elastomer is injected in such a way that it forms the necessary collar portion between the body portion and the socket joining these pieces together. This structure can be further developped in such a manner that this collar portion also gets tasks of a gasket. As is seen from Figure 3, the outer surface of the spigot 4 in the close vicinity of its mouthing is tightly supported against the corrugated collar 7 of the pipe section along a relatively long distance. If the very portion 17 of this collar portion is made of thermoplastic elastomer, the dimensioning of the step 17 can be made such that the outer surface of the spigot will be tightly pressed against this portion modifying it slightly and providing the sealing function desired.

Figure 4 shows a joint between a third and fourth embodiment of the pipe section of the invention. In this joint the pipe section 1 provided with the socket 2 quite far corresponds to the pipe section 1 of the Figures 2 and 3 differing from them only therein that the gasket 9 is now arranged inside the hollow annular ribbed flange 11 of the socket 2 and the mouthpart 5 of the socket 6 is not now provided with the stiffening rib 10. As to the rest, both the structure of the pipe section 1 and the reference numerals of its structural parts correspond to those of the pipe section 1 of the Figures 2 and 3. The fourth embodiment 3 of the pipe section of the invention comprises instead of a socket a spigot 4, which only within the area of the sealing surface abutting the gasket 9 has a smooth cylindrical area 18, which is at least as much as about the heat expansion of the pipe section 3 broader than the sealing surface abutting the gasket. As to the rest, the spigot is relieved by means of relief grooves 19. The smooth cylindrical portion 18 of the spigot 4 guarantees on one hand that the tightness of the joint is preserved also when the length of the pipe section changes due to temperature variations, and provides, on the other hand, the spigot with a strengthening of the wall giving the spigot the desired endurance against the pressing pressure of 5 bars just at the gasket 9 and a sufficient ring stiffness also otherwise.

The pipe section of the invention has above been described in connection with four exemplifying embodiments and it is to be understood that several changes relating to their external form and structure can be made and various combinations can be provided on the basis of the structural solutions of these embodiments without deviating from the scope of protection defined by the enclosed claims, however.

## Claims

1. A method of manufacturing a pipe section, at least a part of the outer surface of which is ribbed, by injecting plastic or another thermoplastic material into an injection mould, **characterized** in that when injecting material the flow resistance of the material at the injection point is adjusted to be smaller in the direction of the periphery of the pipe section than in the axial direction of the pipe section.

2. A method according to claim 1, **characterized** in that the material is injected into the mould by using as injection point at least a mould point situated in the middle area of the pipe section and corresponding to a reinforcement (15) of the wall.

3. A method according to claim 1, **characterized** in that the mould and/or a core therein are cooled in the axial direction of the pipe section from annular areas situated at both sides of the injection point stronger than the injection point.

4. A joint between two pipe sections, at least one (1) of which has at least a part of its outer surface ribbed and is manufactured by the method of claim 1, one section (1) comprising a socket (2) and the other (3) being provided with a spigot (4) to be pushed into the socket (2), and either the socket (2) or the spigot (4) comprising a gasket (9) to seal the joint, **characterized** in that the ring stiffness of the socket/spigot (2; 4) provided with the gasket (9) is greater than the ring stiffness of its counterpart (4; 2) and that the joint is not more than three times ring stiffer than either of the pipe sections (1, 3) separately in the area outside the joint.

5. A joint according to claim 4, **characterized** in that the ring stiffness of the joint is 20 kN/m2 at the most measured according to the standard ISO/DP 9969-1989.

6. A joint according to claim 4 or 5, **characterized** in that the socket (2) and the spigot (4) forming the joint endure the pressing pressure of 5 bars caused by the gasket only within the area of influence of the gasket (9).

7. A joint according to one of the claims 4 to 6, **characterized** in that the ring stiffness of the socket (2) or the spigot (4) is not more than two times greater than the ring stiffness of the rest of the pipe section (1, 3).

8. A joint according to claim 7, **characterized** in that the ring stiffness of a socket/a spigot (2; 4) not provided with a gasket (9) is about 0,3- to 1,0-fold, preferably about 0,3- to 0,6-fold, most preferably about 0,5-fold with respect to the ring stiffness of the rest of the pipe section.

9. A pipe section, at least a part of the outer surface of which is ribbed, manufactured of plastic or another thermoplastic material by the method of claim 1, **characterized** in that the SDR value of the pipe section (2), i.e. the ratio of the average diameter to the wall thickness is about 41 to 60.

10. A pipe section according to claim 9, **characterized** in that it comprises a reinforcement (15) of the wall in its middle area.

11. A pipe section according to claim 9 or 10, comprising an externally ribbed body portion (16) and at least one socket (2) joined thereto and with an inner diameter greater than that of the body portion, which socket comprises a mouth part (5), a collar portion (7) joining the socket (2) to the body portion (16) and a generally cylindrical portion (6) between the mouth part (5) and the collar portion (7), **characterized** in that the socket (2) comprises on the outer surface of its cylindrical portion (6) at least one annular ribbed flange (8) and at its mouth part (5) a hollow annular rib (11) for the gasket and/or a ring stiffness rib (10) at the edge of the mouth part.

12. A pipe section according to claim 11, **characterized** in that the height of the annular ribbed flange (8) of the cylindrical portion (6) of the socket (2) is smaller than the height of the ring stiffness ribs (13) of the body portion.

13. A pipe section according to claim 11 or 12, the socket (2) of which is, while joining the pipe sections (1, 3), intended to receive the spigot (4) of another pipe section (3), the outer surface of which spigot is provided with a gasket (9), **characterized** in that the ribbed flange (8) of the socket (2) is situated in the vicinity of the counter-surface of said gasket (9).

14. A pipe section according to claim 13, **characterized** in that the annular ribbed flange (8) being filled, the countersurface of the gasket (9) at the socket (2) is formed of the area of the inner surface of the socket situated at the rib-bed flange (8).

15. A pipe section according to claim 13, **characterized** in that the annular ribbed flange (8) being hollow, the countersurface of the gasket (19) at the socket (2) is formed of the area of the inner surface of the socket between two ribbed flanges (18).

16. A pipe section according to one of the claims 9 to 15, **characterized** in that it further comprises an annular reinforcement (12, 17) of the collar portion (7) of the socket (2).

17. A pipe section according to claim 16, **characterized** in that the annular reinforcement of the collar portion (7) comprises a strengthening (12) of the wall of the pipe section within the area of the joint between the collar portion (7) and the body portion (16).

18. A pipe section according to claim 16, **characterized** in that the annular reinforcement of the collar portion (7) comprises an axial corrugation (17) of the pipe section.

19. A pipe section according to claim 18, **characterized** in that the material of the corrugation (17) is a material more flexible than the material of the rest of the socket or the body portion, e.g. thermoplastic elastomer.

20. A pipe section according to claim 9 or 10 comprising a body portion (1) and at least one spigot (4) joined thereto to be introduced into a socket (2) provided with a gasket (9) in another pipe section, **characterized** in that the spigot (4) only within the area of a sealing surface abutting the gasket (9) comprises a smooth cylindrical area (18) being at least about the heat expansion of the pipe section broader than the sealing surface abutting the gasket.

## Patentansprüche

1. Ein Verfahren zur Herstellung eines Rohrabschnitts, von dem zumindest ein Teil der äußeren Oberfläche gerippt ist, durch Spritzen eines Kunststoff- oder anderen thermoplastischen Materials in eine Spritzgußform, dadurch **gekennzeichnet,** daß, wenn Material eingespritzt wird, der Fließwiderstand des Materials am Einspritzpunkt so angepaßt wird, daß er in der Richtung des Umfangs des Rohrabschnitts geringer ist als in der axialen Richtung des Rohrabschnitts.

2. Verfahren nach Anspruch 1, dadurch gekennzeichnet, daß das Material in die Form gespritzt wird, indem als Einspritzpunkt zumindest ein Punkt in der Form verwendet wird, der sich im mittleren Bereich des Rohrabschnitts befindet und einer Verstärkung (15) der Wand entspricht.

3. Verfahren nach Anspruch 1, dadurch gekennzeichnet, daß die Form und/oder ein Kern darin in der axialen Richtung des Rohrabschnitts von ringförmigen Bereichen aus, die sich auf beiden Seiten des Einspritzpunktes befinden und die stärker sind als der Einspritzpunkt, abgekühlt werden.

4. Verbindung zwischen zwei Rohrabschnitten, bei denen mindestens bei einem (1) zumindest ein Teil der äußeren Oberfläche gerippt und nach dem Verfahren von Anspruch 1 hergestellt ist, wobei ein Abschnitt (1) eine Buchse (2) aufweist und der andere (3) mit einem Zapfen (4) versehen ist, der in die Buchse (2) zu schieben ist, und wobei entweder die Buchse (2) oder der Zapfen (4) eine Dichtung (9) aufweist, um die Verbindung abzudichten, dadurch gekennzeichnet, daß die Ringsteifigkeit der Buchse/des Zapfen (2; 4), die/der mit der Dichtung (9) versehen ist, größer ist als die Ringsteifigkeit seines Gegenstücks (4; 2) und daß die Verbindung nicht mehr als dreimal ringsteifer ist als jeder der Rohrabschnitte (1, 3) separat in dem Bereich außerhalb der Verbindung.

5. Verbindung nach Anspruch 4, dadurch gekennzeichnet, daß die Ringsteifigkeit der Verbindung gemessen nach der Norm ISO/DP 9969-1989 höchstens 20 kN/m² beträgt.

6. Verbindung nach Anspruch 4 oder 5, dadurch gekennzeichnet, daß die Buchse (2) und der Zapfen (4), die die Verbindung bilden, den Preßdruck von 5 Bar aushalten, der durch die Dichtung nur innerhalb des Einflußbereichs der Dichtung (9) verursacht wird.

7. Verbindung nach einem der Ansprüche 4 bis 6, dadurch gekennzeichnet, daß die Ringsteifigkeit der Buchse (2) oder des Zapfens (4) nicht mehr als doppelt so groß ist wie die Ringsteifigkeit des restlichen Rohrabschnitts (1, 3).

8. Verbindung nach Anspruch 7, dadurch gekennzeichnet, daß die Ringsteifigkeit einer/eines nicht mit einer Dichtung (9) versehenen Buchse/Zapfens (2; 4) unter Bezugnahme auf die Ringsteifigkeit des restlichen Rohrabschnitts ungefähr das 0,3 bis 1,0-fache, vorzugsweise ungefähr das 0,3 bis 0,6-fache, am meisten bevorzugt ungefähr das 0,5-fache, beträgt.

9. Rohrabschnitt, von dem zumindest ein Teil der äußeren Oberfläche gerippt ist und der aus einem Kunststoff- oder anderen thermoplastischen Material nach dem Verfahren von Anspruch 1 hergestellt ist, dadurch gekennzeichnet, daß das Verhältnis des durchschnittlichen Rohrdurchmessers zur Wandstärke des Rohrabschnitts ungefähr 41 bis 60 beträgt.

10. Rohrabschnitt nach Anspruch 9, dadurch gekennzeichnet, daß er in seinem mittleren Bereich eine Verstärkung (15) der Wand aufweist.

11. Rohrabschnitt nach Anspruch 9 oder 10, der einen außen gerippten Körperabschnitt (16) und mindestens eine Buchse (2) aufweist, die damit verbunden ist, und mit einem Innendurchmesser, der größer ist als derjenige des Körperabschnitts, wobei die Buchse ein Mundstück (5), einen Kragenabschnitt (7), der die Buchse (2) mit dem Körperabschnitt (16) verbindet, und einen im allgemeinen zylindrischen Abschnitt (6) zwischen dem Mundstück (5) und dem Kragenabschnitt (7) aufweist, dadurch gekennzeichnet, daß die Buchse (2) auf der äußeren Oberfläche ihres zylindrischen Abschnitts (6) mindestens einen ringförmigen gerippten Flansch (8) und an ihrem Mundstück (5) eine hohle ringförmige Rippe (11) für die Dichtung und/oder eine Ringsteifigkeitsrippe (10) an der Kante des Mundstücks aufweist.

12. Rohrabschnitt nach Anspruch 11, dadurch gekennzeichnet, daß die Höhe des ringförmigen Flansches (8) des zylindrischen Abschnitts (6) der Buchse (2) kleiner ist als die Höhe der Ringsteifigkeitsrippen (13) des Körperabschnitts.

13. Rohrabschnitt nach Anspruch 11 oder 12, dessen Buchse (2), während sie die Rohrabschnitte (1, 3) verbindet, den Zapfen (4) eines anderen Rohrabschnitts (3) aufnehmen soll, wobei die äußere Oberfläche des Zapfens mit einer Dichtung (9) versehen ist, dadurch gekennzeichnet, daß sich der gerippte Flansch (8) der Buchse (2) in der Nähe der Gegenoberfläche der Dichtung (9) befindet.

14. Rohrabschnitt nach Anspruch 13, dadurch gekennzeichnet, daß, wenn der ringförmige gerippte Flansch (8) gefüllt ist, die Gegenoberfläche der Dichtung (9) an der Buchse (2) aus dem Bereich der inneren Oberfläche der Buchse gebildet wird, die sich am gerippten Flansch (8) befindet.

15. Rohrabschnitt nach Anspruch 13, dadurch gekennzeichnet, daß, wenn der ringförmige gerippte Flansch (8) hohl ist, die Gegenoberfläche der Dichtung (19) an der Buchse (2) aus dem Bereich der inneren Oberfläche der Buchse zwischen zwei gerippten Flanschen (18) gebildet wird.

16. Rohrabschnitt nach einem der Ansprüche 9 bis 15, dadurch gekennzeichnet, daß er weiterhin eine ringförmige Verstärkung (12, 17) des Kragenabschnitts (7) der Buchse (2) aufweist.

17. Rohrabschnitt nach Anspruch 16, dadurch gekennzeichnet, daß die ringförmige Verstärkung des Kragenabschnitts (7) eine Verstärkung (12) der Wand des Rohrabschnitts innerhalb des Verbindungsbereichs zwischen dem Kragenabschnitt (7) und dem Körperabschnitt (16) aufweist.

18. Rohrabschnitt nach Anspruch 16, dadurch gekennzeichnet, daß die ringförmige Verstärkung des Kragenabschnitts (7) ein axiales Verstärkungsprofil (17) des Rohrabschnitts aufweist.

19. Rohrabschnitt nach Anspruch 18, dadurch gekennzeichnet, daß das Material des Verstärkungsprofils (17) ein flexibleres Material ist als dasjenige der restlichen Buchse oder des Körperabschnitts, z.B. ein thermoplastisches Elastomer.

20. Rohrabschnitt nach Anspruch 9 oder 10, der einen Körperabschnitt (1) und mindestens einen damit verbundenen Zapfen (4) aufweist, der in eine Buchse (2) in einem anderen Rohrabschnitt, die mit einer Dichtung (9) versehen ist, eingeführt werden soll, dadurch gekennzeichnet, daß der Zapfen (4) nur innerhalb des Bereichs einer Dichtungsfläche, die an die Dichtung (9) anstößt, einen glatten zylindrischen Bereich (18) aufweist, der mindestens ungefähr um die Wärmeausdehnung des Rohrabschnitts breiter ist als die Dichtungsfläche, die an die Dichtung anstößt.

## Revendications

1. Procédé de fabrication d'une section de tuyau dont au moins une partie de la surface extérieure comporte des nervures, en injectant une matière plastique ou autre matière thermoplastique dans un moule d'injection, caractérisé en ce que, lorsqu'on injecte la matière dans le moule d'injection, la résistance de la matière à l'écoulement au point d'injection est réglée de façon à être plus faible suivant la direction de la périphérie de la section de tuyau que suivant la direction axiale de la section de tuyau.

2. Procédé selon la revendication 1, caractérisé en ce que la matière est injectée dans le moule en utilisant comme point d'injection au moins un point du moule situé dans la zone centrale de la section de tuyau et correspondant à un renforcement (15) de la paroi.

3. Procédé selon la revendication 1, caractérisé en ce que le moule, et/ou un noyau situé dans ce dernier, sont refroidis suivant la direction axiale de la section de tuyau à partir de zones annulaires situées d'un côté et de l'autre du point d'injection d'une manière plus intense qu'au point d'injection.

4. Joint entre deux sections de tuyau dont au moins l'une (1) comporte au moins une partie de sa surface extérieure qui est pourvue de nervures et qui est fabriquée par le procédé de la revendication 1, une section (1) comprenant un emboîtement (2) et l'autre (3) étant pouvue d'un bout mâle (4) devant être enfoncé dans l'emboîtement (2), tandis que soit l'emboîtement (2), soit le bout mâle (4) comprend une garniture d'étanchéité (9) servant à assurer l'étanchéité du joint, caractérisé en ce que la rigidité circonférentielle de l'emboîtement/bout mâle (2 ; 4) qui est pourvu de la garniture d'étanchéité (9) est supérieure à la rigidité circonférentielle de la partie complémentaire (4 ; 2) et en ce que la rigidité circonférentielle du joint n'est pas plus de trois fois supérieure à celle que l'une ou l'autre des sections de tuyau (1, 3) présente séparément dans la zone située à l'extérieur du joint.

5. Joint selon la revendication 4, caractérisé en ce que la rigidité circonférentielle du joint est au plus égale à 20 kN/m² lorsqu'elle est mesurée conformément à la norme ISO/DP 9969-1989.

6. Joint selon la revendication 4 ou 5, caractérisé en ce que l'emboîtement (2) et le bout mâle (4) formant le joint résistent à la pression de compression de 5 bars créée par la garniture d'étanchéité uniquement dans la zone d'influence de cette garniture d'étanchéité (9).

7. Joint selon l'une des revendications 4 à 6, caractérisé en ce que la rigidité circonférentielle de l'emboîtement (2) ou du bout mâle (4) n'est pas plus de deux fois supérieure à la rigidité circonférentielle du reste de la section de tuyau (1, 3).

8. Joint selon la revendication 7, caractérisé en ce que la rigidité circonférentielle de l'emboîtement/bout mâle (2 ; 4) non pourvu d'une garniture d'étanchéité (9) est égale à environ 0,3 à 1,0 fois, de préférence environ 0,3 à 0,6 fois et, mieux, environ 0,5 fois la rigidité circonférentielle du reste de la section de tuyau.

9. Section de tuyau, dont au moins une partie de la surface extérieure comporte des nervures et qui est réalisée en matière plastique ou autre matière thermoplastique par le procédé de la revendication 1, caractérisée en ce que la valeur SDR de la section de tuyau (2), c'est-à-dire le rapport du diamètre moyen à l'épaisseur de paroi, est d'environ 41 à 60.

10. Section de tuyau selon la revendication 9, caractérisée en ce qu'elle comprend un renforcement (15) de la paroi dans sa zone centrale.

11. Section de tuyau selon la revendication 9 ou 10, comprenant une partie courante (16), comportant extérieurement des nervures, et au moins un emboîtement (2) solidaire de cette partie courante et ayant un diamètre intérieur supérieur à celui de la partie courante, ledit emboîtement comprenant une partie d'ouverture (5), une partie de raccordement (7), reliant l'emboîtement (2) à la partie courante (16), et une partie pratiquement cylindrique (6) entre la partie d'ouverture (5) et la partie de raccordement (7), caractérisée en ce que l'emboîtement (2) comprend, sur la surface extérieure de sa partie cylindrique (6), au moins une collerette annulaire conformée en nervure (8) et, à sa partie d'ouverture (5), une nervure annulaire creuse (11) destinée à la garniture d'étanchéité et/ou une nervure de rigidité circonférentielle (10) située au bord de la partie d'ouverture.

12. Section de tuyau selon la revendication 11, caractérisée en ce que la hauteur de la collerette annulaire conformée en nervure (8) de la partie cylindrique (6) de l'emboîtement (2) est plus petite que la hauteur des nervures de rigidité circonférentielle (13) de la partie courante.

13. Section de tuyau selon la revendication 11 ou 12, dont l'emboîtement (2), tout en assurant la jonction des sections de tuyau (1, 3), est destiné à recevoir le bout mâle (4) d'une autre section de tuyau (3), la surface extérieure de ce bout mâle étant pourvue d'une garniture d'étanchéité (9), caractérisée en ce que la collerette conformée en nervure (8) de l'emboîtement (2) est située au voisinage de la surface complémentaire de la garniture d'étanchéité (9).

14. Section de tuyau selon la revendication 13, caractérisée en ce que, lorsque la collerette annulaire conformée en nervure (8) est pleine, la surface complémentaire de la garniture d'étanchéité (9) qui est prévue sur l'emboîtement (2) est formée par la zone de la surface intérieure de l'emboîtement qui est située à l'endroit de la collerette conformée en nervure (8).

15. Section de tuyau selon la revendication 13, caractérisée en ce que, lorsque la collerette annulaire conformée en nervure (8) est creuse, la surface complémentaire de la garniture d'étanchéité (19) qui est prévue sur l'emboîtement (2) est formée par la zone de la surface intérieure de l'emboîtement qui est située entre deux collerettes conformées en nervure (18).

16. Section de tuyau selon l'une des revendications 9 à 15, caractérisée en ce qu'elle comprend en outre un renforcement annulaire (12, 17) de la partie de raccordement (7) de l'emboîtement (2).

17. Section de tuyau selon la revendication 16, caractérisée en ce que le renforcement annulaire de la partie de raccordement (7) comprend une consolidation (12) de la paroi de la section de tuyau dans la zone du joint située entre la partie de racordement (7) et la partie courante (16).

18. Section de tuyau selon la revendication 16, caractérisée en ce que le renforcement annulaire de la partie de raccordement (17) comprend une partie (17) de la section de tuyau qui forme une différence de niveau dans le sens axial.

19. Section de tuyau selon la revendication 18, caractérisée en ce que la matière de la partie formant une différence de niveau (17) est une matière plus flexible que la matière du reste de l'emboîtement ou de la partie courante, par exemple un élastomère thermoplastique.

20. Section de tuyau selon la revendication 9 ou 10, comprenant une partie courante (1) et au moins un bout mâle (4) solidaire de cette partie courante et destiné à être introduit dans un emboîtement (2) qui est pourvu d'une garniture d'étanchéité (9) et fait partie d'une autre section de tuyau, caractérisée en ce qu'uniquement dans la zone d'une surface d'étanchéité venant en butée sur la garniture d'étanchéité (9), le bout mâle (4) comporte une zone cylindrique lisse (18) qui est, au moins d'environ la dilatation thermique de la section de tuyau, plus large que la surface d'étanchéité venant en butée sur la garniture d'étanchéité.
